# FASCICULE DE BREVET EUROPEEN

(11) **EP 1 869 626 B1**
(45) Date de publication et mention de la délivrance du brevet: **18.01.2012**
(21) Numéro de dépôt: 06755422.0
(22) Date de dépôt: 18.04.2006
(51) Int. Cl.: G06K 19/077

(54) **ANTENNE POUR ETIQUETTE ELECTRONIQUE**
ANTENNE FÜR ELEKTRONISCHE ETIKETTEN
ANTENNA FOR ELECTRONIC LABEL

(30) Priorité: 15.04.2005 FR 0550964
(43) Date de publication de la demande: 26.12.2007
(73) Titulaire: STMicroelectronics SA, F-92120 Montrouge (FR)
(72) Inventeur: MANI, Christophe, F-84300 Cavaillon (FR)
(74) Mandataire: de Beaumont, Michel
(86) Numéro de dépôt international: PCT/FR2006/000857
(87) Numéro de publication internationale: WO 2006/108970

(56) Documents cités:
- WO-A-99/04295
- DE-A1- 19 536 464
- PATENT ABSTRACTS OF JAPAN vol. 2003, no. 12, 5 décembre 2003 (2003-12-05) & JP 2004 165531 A (DAINIPPON PRINTING CO LTD), 10 juin 2004 (2004-06-10)

## Description

### Domaine de l'invention

La présente invention concerne de façon générale les systèmes à transpondeur électromagnétique et, plus particulièrement, les transpondeurs électromagnétiques dépourvus d'alimentation autonome, qui extraient l'énergie nécessaire au fonctionnement des circuits électroniques qu'ils comportent d'un champ électromagnétique rayonné par un terminal de lecture et/ou de lecture/écriture.

Un exemple d'application de l'invention concerne les étiquettes électroniques (TAG) comprenant une puce électronique et une antenne de réception d'un champ radiofréquence.

### Exposé de l'art antérieur

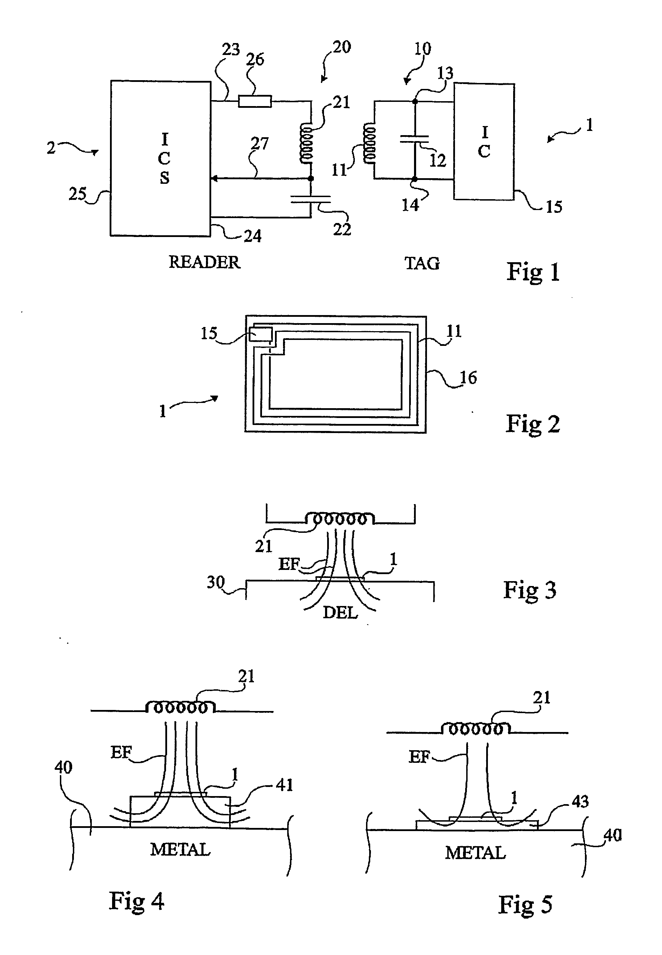

La figure 1 représente, de façon très schématique et sous forme de blocs, un exemple de système à transpondeur électromagnétique du type auquel s'applique la présente invention. Une étiquette électronique 1 (TAG) constituant un transpondeur électromagnétique est basée sur un circuit oscillant 10 formé, par exemple, d'un élément inductif 11 en parallèle avec un élément capacitif 12 entre deux bornes 13 et 14 du circuit 10. Les bornes 13 et 14 sont connectées à un circuit électrique 15 (IC), généralement un unique circuit intégré, destiné à exploiter la tension récupérée aux bornes du circuit oscillant 10 lorsque l'étiquette 1 se trouve dans un champ radiofréquence rayonné par un terminal 2 (READER) ou borne de lecture ou de lecture/écriture. Le terminal 2 comporte un circuit oscillant 20 basé sur un élément inductif 21 formant antenne, par exemple, en série avec un élément capacitif 22 et un élément résistif 26 entre deux bornes 23 et 24 d'un circuit électronique 25 (ICS). Le circuit 25 comprend un ou plusieurs circuits intégrés pour exciter le circuit oscillant et interpréter les éventuelles transmissions provenant de l'étiquette électronique 1.

Le fonctionnement d'un tel système est basé sur le couplage des circuits oscillants 20 et 10 du terminal 2 et du transpondeur 1. Côté borne 2, le circuit 25 génère un signal d'excitation haute fréquence (typiquement avec une porteuse à une fréquence de l'ordre de 13,56 MHz ou de l'ordre de 125 kHz selon les applications). Ce signal est appliqué à l'antenne 21 pour génération d'un champ électromagnétique au voisinage du terminal. Lorsqu'un transpondeur 1 se trouve dans le champ du terminal, son antenne 11 capte l'énergie rayonnée par la borne et le circuit résonnant 10 développe entre ses bornes 13 et 14 une tension exploitable par le circuit 15. Les circuits oscillants 10 et 20 sont généralement accordés sur une même fréquence de résonance correspondant approximativement à la fréquence de la porteuse du signal émis par la borne. Généralement, le circuit 15 est dépourvu d'alimentation autonome et prélève l'énergie nécessaire à son fonctionnement du champ rayonné par la borne. Le circuit 15 intègre des moyens, dits de rétro-modulation, pour modifier la charge constituée par le transpondeur 1 dans le champ de la borne de façon à permettre une communication dans le sens transpondeur vers borne. Côté borne 2, la tension aux bornes de l'élément capacitif 22 est par exemple mesurée, le point d'interconnexion entre l'antenne 21 et le condensateur 22 étant relié (liaison 27) au circuit 25 pour permettre une démodulation des transmissions transpondeur vers borne. Selon les applications, la porteuse haute fréquence générée par le terminal 2 peut également être modulée pour transmettre des informations à destination du transpondeur.

La figure 2 représente, de façon très schématique et vue de dessus, un exemple d'étiquette électronique 1 du type auquel s'applique plus particulièrement la présente invention. Une telle étiquette est constituée d'une plaque 16 (souple ou rigide) sur laquelle est déposée une piste métallique 11 sous la forme d'un enroulement plan de spires concentriques pour former l'antenne, les deux extrémités de la piste 11 étant reliées à des bornes du circuit 15 supposé ici intégrer le condensateur 12.

Une étiquette 1 telle qu'illustrée par la figure 2 est généralement associée à un objet ou un élément, par exemple, à des fins d'identification. Il peut s'agir de produits (par exemple, de produits en vente dans un magasin), de cartes à puce dans des applications de contrôle d'accès, etc. Plus généralement, une étiquette électronique peut être associée à n'importe quel objet ou système (par exemple, un véhicule) à des fins d'identification, de comptage, ou autre.

La figure 3 représente un exemple d'objet 30 sur lequel est rapportée (par exemple collée) une étiquette 1 du type de celle illustrée en figure 2. Le produit 30 est supposé en un matériau isolant (DIEL), par exemple du carton, du plastique, etc. Lorsque l'antenne plane (non visible en figure 3) de l'étiquette 1 se trouve à proximité d'un lecteur (représenté en figure 3 par son antenne 21), le champ électrique de l'antenne 21 est susceptible d'être capté par le produit 1, les lignes de champ EF traversant la plaque 16 (figure 2) de l'étiquette 1 et l'objet 30 en passant au centre de l'enroulement plan 11.

Un problème se pose toutefois dans le cas où l'étiquette 1 est rapportée sur un objet métallique au moins en surface. En effet, le champ électromagnétique est perturbé par cet objet qu'il ne peut traverser. De plus, cela provoque un désaccord des circuits oscillants de la borne et du transpondeur, ce qui nuit à la téléalimentation de l'étiquette et à la transmission d'information.

La figure 4 représente, de façon très schématique, un premier exemple connu de solution pour rapporter une étiquette électronique 1 à antenne plane sur un objet 40 métallique (METAL). Cette solution consiste à intercaler un espaceur 41 constitué d'un bloc isolant entre l'étiquette 1 et l'objet 40. Un inconvénient est l'encombrement de l'espaceur 41 dont l'épaisseur doit en pratique être supérieure à 5 millimètres pour permettre une sortie des lignes de champ EF par les faces latérales de cet espaceur.

La figure 5 représente, de façon très schématique, un deuxième exemple classique de solution pour rapporter une étiquette électronique 1 sur un objet 40 en métal. Dans cette solution, un espaceur 43 en ferrite est intercalé entre l'objet métallique 40 et l'étiquette électronique 1. Le recours à un espaceur en ferrite permet de réduire l'épaisseur de cet espaceur, le matériau ferromagnétique conduisant le champ de sorte à permettre un rebouclage des lignes de champ et éviter la perturbation du métal. Un inconvénient de la ferrite ou autre matériau ferromagnétique est qu'il s'agit de matériaux chers, en pratique incompatibles avec les faibles coûts recherchés pour les systèmes à étiquettes électroniques.

Le problème de perturbation d'un objet métallique sur le fonctionnement d'un système à transpondeur est d'autant plus critique que la fréquence de la porteuse est élevée. En effet, plus la fréquence est élevée, plus le nombre de tours de l'enroulement plan 11 de l'antenne est faible (typiquement 1 à 3 tours pour une fréquence de 13,56 MHz). Or, plus le nombre de tours est faible, moins le couplage est important et plus le système est sensible aux perturbations.

Le document WO 99/04295 décrit un transpondeur ayant un élément inductif constitué de deux groupes de pistes conductrices parallèles entre elles, dans deux plans distincts séparés par un matériau isolant.

Le document JP 2004165531 décrit un circuit d'antenne réalisé sur deux faces d'un circuit intégré.

### Résumé de l'invention

La présente invention vise à pallier tout ou partie des inconvénients des systèmes à transpondeurs connus. L'invention vise plus particulièrement à proposer une structure d'étiquette électronique qui puisse être apposée directement sur un objet métallique sans que cela nuise à son fonctionnement.

L'invention vise également à proposer une solution particulièrement adaptée à des fréquences de plusieurs MHz.

L'invention vise également à proposer une solution économique évitant le recours à un matériau ferromagnétique.

Pour atteindre tout ou partie de ces objets ainsi que d'autres, la présente invention prévoit un élément inductif selon la revendication 1.

La présente invention prévoit également une antenne de réception d'une émission radio fréquence, comportant un tel élément inductif.

La présente invention prévoit également un transpondeur électromagnétique comportant une telle antenne.

Selon un mode de réalisation de la présente invention, des circuits électroniques du transpondeur sont formés dans la plaquette semiconductrice sous-jacente à l'antenne.

Selon un mode de réalisation de la présente invention, le transpondeur est rapporté sur une surface métallique d'un objet.

La présente invention prévoit en outre un objet comportant au moins une surface métallique et, contre cette surface, un transpondeur électromagnétique.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment représente, de façon très schématique et sous forme de blocs, un exemple de système à transpondeur électromagnétique du type auquel s'applique la présente invention ;
la figure 2 qui a été décrite précédemment est une vue schématique de dessus d'une étiquette électronique classique ;
la figure 3 qui a été décrite précédemment illustre l'association d'une étiquette électronique classique avec un objet isolant ;
la figure 4 qui a été décrite précédemment illustre une première solution classique pour associer une étiquette électronique à un objet métallique ;
la figure 5 qui a été décrite précédemment illustre une deuxième solution classique pour associer une étiquette électronique à un objet métallique ;
la figure 6 représente, de façon très schématique et fonctionnelle, un mode de réalisation d'un enroulement inductif pour former une antenne d'un transpondeur électromagnétique selon un mode de réalisation de la présente invention ;
la figure 7 illustre l'association d'une étiquette électronique selon un mode de réalisation de l'invention avec un objet métallique ;
la figure 8 représente une antenne pour transpondeur électromagnétique selon un premier mode de réalisation de la présente invention ; et
la figure 9 représente un transpondeur électromagnétique pourvu d'une antenne selon un deuxième mode de réalisation de la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, l'exploitation des signaux prélevés aux bornes d'une antenne d'un transpondeur électromagnétique de l'invention n'ont pas été détaillés, l'invention étant compatible avec les systèmes classiques.

Une caractéristique d'un mode de réalisation de la présente invention, est de remplacer un enroulement plan pour former l'antenne du transpondeur électromagnétique par un enroulement de type bobiné de façon à obtenir une bobine en trois dimensions.

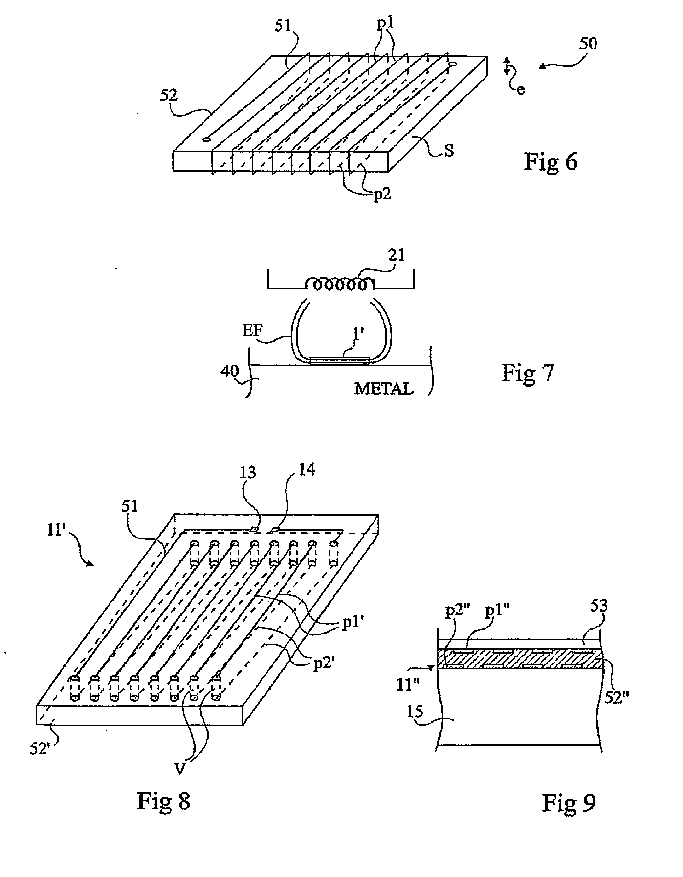

La figure 6 représente fonctionnellement, de façon très schématique, un exemple d'antenne 50 selon la présente invention. Cette antenne 50 est constituée autour d'un élément isolant plan 52, d'un premier groupe de pistes conductrices p1 parallèles entre elles et coplanaires dans un premier plan (première face de l'élément 52) et d'un deuxième groupe de pistes conductrices p2, également parallèles entre elles mais coplanaires dans un deuxième plan (deuxième face de l'élément 52) parallèle au premier. A l'exception de deux pistes d'extrémité (par exemple, les deux pistes d'extrémité du premier groupe), les deux extrémités de chaque piste sont reliées à deux extrémités de deux pistes voisines entre elles de l'autre groupe, de façon à former un enroulement conducteur 51 en trois dimensions. En d'autres termes, une extrémité de chaque piste p1 est reliée à une extrémité d'une piste p2 dont l'autre extrémité est reliée à une extrémité d'une autre piste p1.

Typiquement, l'épaisseur e de l'élément isolant 52 est inférieure à 2 millimètres. L'inductance équivalente d'un enroulement 51 du type de celui illustré en figure 6 est fonction de la section S de l'élément 52 parallèlement au bobinage 51 réalisé et du nombre de tours conducteurs.

La figure 7 illustre, de façon très schématique et par une vue à rapprocher des vues des figures 3 à 5 décrites précédemment, un exemple d'association d'une étiquette électronique 1' selon un mode de réalisation de l'invention à un objet métallique 40 (METAL). Un champ électromagnétique (symbolisé par des lignes de champ EF) rayonné par une antenne 21 d'un terminal classique de lecture ou de lecture-écriture traverse l'étiquette 1' dans une direction parallèle à la surface de l'objet 40 sur laquelle repose l'étiquette 1' en passant au milieu du bobinage 51.

on évite ainsi les perturbations de l'objet métallique en évitant de devoir canaliser le champ perpendiculaire à la surface de cet objet comme c'est le cas dans les figures 4 et 5.

La figure 8 représente, de façon plus détaillée, un premier exemple de réalisation d'une antenne 11' pour transpondeur électromagnétique selon la présente invention. Dans cet exemple, on utilise une plaquette 52' isolante, par exemple du type plaque de circuit imprimé (PCB ou Printed Circuit Board), sur les deux faces de laquelle sont formées des pistes conductrices allongées p1' (face supérieure) et p2' (face inférieure), de préférence rectilignes. Pour réaliser l'enroulement métallique 51, les extrémités respectives des pistes p1' et p2' sont interconnectées au moyen de vias conducteurs v traversant l'épaisseur de la plaquette 52'. Les deux extrémités de l'enroulement définissent les bornes de l'inductance et forment, par exemple, les bornes 13 et 14 du circuit résonant du transpondeur entre lesquelles est connecté un élément capacitif (12, figure 1), non représenté en figure 8.

Dans le mode de réalisation de la figure 8, il est possible de rapporter une puce circuit intégré comprenant les circuits (15, figure 1) du transpondeur directement sur la face supérieure de la plaquette 52', pourvu de revêtir les tronçons supérieurs p1' de la piste 51 d'un matériau isolant au moins dans la zone de réception de la puce.

Le nombre de tours à réaliser pour l'antenne dépend de la fréquence de fonctionnement du système. L'invention est particulièrement intéressante dans les applications haute fréquence (par exemple 13,56 MHz) dans la mesure où, pour une même valeur de condensateur de l'étiquette électronique, le nombre de tours requis est moindre que dans les applications plus basse fréquence (quelques centaines de kHz).

A titre d'exemple particulier de réalisation, l'antenne 11' est réalisée sur une plaque de circuit imprimé d'environ 1 mm d'épaisseur. Les pistes font environ 1 cm de long et 0,5 mm de large et les pistes d'un même groupe sont espacées d'environ 0,5 mm.

La figure 9 représente un deuxième mode de réalisation d'une antenne de transpondeur électromagnétique selon l'invention. L'antenne est formée de pistes p1" et p2" parallèles et superposées dans deux niveaux métalliques rapportés sur une puce 15 de circuit intégré. Pour simplifier, les détails des zones actives et/ou passives de la puce 15 n'ont pas été représentés, ni les autres niveaux de métallisation généralement requis pour les interconnexions. Les pistes p1' et p2' sont séparées par une épaisseur d'isolant 52" jouant le rôle de l'élément isolant du centre du bobinage réalisé. Des vias (non représentés) conducteurs connectent les extrémités respectives des pistes p1" et p2" pour former le bobinage. De préférence, une couche de protection isolante 53 (par exemple, la couche de passivation) est déposée sur le dernier niveau métallique.

Un avantage du mode de réalisation de la figure 9 est qu'il permet de réaliser l'antenne directement sur la puce de circuit intégré formant les circuits d'exploitation du transpondeur électromagnétique. On gagne ainsi en surface.

Un autre avantage du mode de réalisation de la figure 9 est qu'il permet d'obtenir des valeurs d'inductance supérieures à celles que l'on peut obtenir en utilisant des enroulements plans formés par des niveaux de métallisation sur une plaquette de circuit intégré.

Bien entendu, la présente invention est susceptible de diverses variantes et modifications qui apparaîtront à l'homme de l'art. En particulier, les dimensions à donner à une bobine selon l'invention (notamment, la largeur des pistes, l'écart entre deux pistes voisines d'un même groupe pour des besoins d'isolement, la surface en section de l'élément isolant 52, etc.) pour obtenir une antenne adaptée à un transpondeur électromagnétique à partir des indications fonctionnelles données ci-dessus sont à la portée de l'homme du métier en fonction de l'application visée (notamment de la fréquence de la porteuse et de la taille de l'élément capacitif).

De plus, bien que l'invention ait été décrite plus particulièrement en relation avec l'utilisation d'une plaque en circuit imprimé pour, dans le premier mode de réalisation, former l'antenne, n'importe quel autre matériau isolant pourra être utilisé. Le circuit imprimé constitue un mode de réalisation préféré en raison de la maîtrise des techniques classiques pour y réaliser des pistes métalliques et des vias.

## Revendications

1. Elément inductif, comportant :
un premier groupe de pistes conductrices (p1', p1") parallèles entre elles et coplanaires dans un premier plan ;
un deuxième groupe de pistes conductrices (p2', p2") parallèles entre elles et coplanaires dans un deuxième plan parallèle au premier plan ; et
un matériau isolant séparant les deux groupes de pistes, une extrémité de chaque piste du premier groupe étant reliée à une extrémité d'une piste du deuxième groupe dont l'autre extrémité est reliée à une extrémité d'une autre piste du premier groupe,
**caractérisé en ce que** chaque groupe de pistes est déposé sur l'une des faces d'un support isolant (52') percé de trous traversant métallisés (v) ou dans un niveau de métal rapporté sur une plaquette semiconductrice avec interposition d'une couche (52") isolante, les liaisons entre les pistes étant des vias conducteurs (v) constitués des trous traversants métallisés ou étant formés dans ladite couche isolante.

2. Elément inductif selon la revendication 1, dans lequel le support d'isolant (52') est une plaquette de circuit imprimé.

3. Antenne (11', 11") de réception d'une émission radio fréquence, **caractérisée en ce qu'**elle comporte un élément inductif selon l'une quelconque des revendications 1 et 2.

4. Transpondeur électromagnétique (1'), **caractérisé en ce qu'**il comporte une antenne (11', 11") selon la revendication 3.

5. Transpondeur selon la revendication 4, dans lequel des circuits électroniques (15) du transpondeur (1) sont formés dans la plaquette semiconductrice sous-jacente à l'antenne (11") .

6. Transpondeur électromagnétique selon la revendication 4 ou 5, rapporté sur une surface métallique d'un objet (40) .

7. Objet (40) comportant au moins une surface métallique, **caractérisé en ce qu'**il comporte, contre ladite surface, un transpondeur (1') selon l'une quelconque des revendications 4 à 6.

## Claims

1. An inductive element, comprising:
a first group of parallel conductive tracks (p1', p1") coplanar in a first plane;
a second group of parallel conductive tracks (p2', p2") coplanar in a second plane parallel to the first plane; and
an insulating material separating the two groups of tracks, one end of each track of the first group being connected to an end of a track of the second group having its other end connected to an end of another track of the first group,
**characterized in that** each group of tracks is deposited on one of the surfaces of an insulating support (52') pierced with through metallized holes (v) or in a metal level placed on a semiconductor wafer with an interposed insulating layer (52"), the connections between tracks being conductive vias (v) formed of the through metallized holes or formed in said insulating layer.

2. The inductive element of claim 1, wherein the insulator support (52') is a printed circuit wafer.

3. An antenna (11', 11") for receiving a radiofrequency transmission, **characterized in that** it comprises the inductive element of claim 1 or 2.

4. An electromagnetic transponder (1') comprising the antenna (11', 11") of claim 3.

5. The transponder of claim 4, wherein electronic circuits (15) of the transponder (1) are formed in the semiconductor wafer underlying the antenna (11").

6. The electromagnetic transponder of claim 4 or 5, disposed on a metal surface of an object (40).

7. An object (40) comprising at least one metal surface, **characterized in that** it comprises, against said surface, the transponder (1') of any of claims 4 to 6.

## Patentansprüche

1. Induktives Element, welches Folgendes aufweist:
eine erste Gruppe von parallelen leitenden Bahnen (p1', p1"), die coplanar in einer ersten Ebene sind;
eine zweite Gruppe von parallelen leitenden Bahnen (p2', p2"), die in einer zweiten Ebene parallel zur ersten Ebene coplanar sind; und
ein isolierendes Material, welches die zwei Gruppen von Bahnen trennt, wobei ein Ende jeder Bahn der ersten Gruppe mit einem Ende einer Bahn der zweiten Gruppe verbunden ist, deren anderes Ende mit einem Ende von einer weiteren Bahn der ersten Gruppe verbunden ist,
**dadurch gekennzeichnet, dass** jede Gruppe von Bahnen auf einer der Oberflächen eines isolierenden Trägers (52') angeordnet ist, der von metallisierten Durchgangslöchern (v) durchdrungen ist, oder in einer auf einem Halbleiter-Wafer angeordneten Metallstufe mit einer dazwischen angeordneten isolierenden Schicht (52") angeordnet ist, wobei die Verbindungen zwischen den Bahnen leitende Bahnen (v) sind, die aus den metallisierten Durchgangslöchern geformt sind, oder in der isolierenden Schicht geformt sind.

2. Induktives Element nach Anspruch 1, wobei der isolierende Träger (52') ein Wafer mit einer gedruckten Schaltung ist.

3. Antenne (11', 11") zum Empfangen einer Funkfrequenzübertragung, **dadurch gekennzeichnet, dass** sie das induktive Element nach Anspruch 1 oder 2 aufweist.

4. Elektromagnetischer Transponder (1'), der die Antenne (11', 11") nach Anspruch 3, aufweist.

5. Transponder nach Anspruch 4, wobei elektronische Schaltungen (15) des Transponders (1) im Halbleiter-Wafer geformt sind, der unter der Antenne (11") liegt.

6. Elektronmagnetischer Transponder nach Anspruch 4 oder 5, der auf einer Metalloberfläche eines Objektes (40) angeordnet ist.

7. Objekt (40), welches zumindest eine Metalloberfläche aufweist, **dadurch gekennzeichnet, dass** diese anliegend an der Oberfläche den Transponder (1') nach einem der Ansprüche 4 bis 6 aufweist.
